# EUROPEAN PATENT SPECIFICATION

(11) **EP 4 435 495 B1**
(45) Date of publication and mention of the grant of the patent: **05.11.2025**
(21) Application number: 24164220.6
(22) Date of filing: 18.03.2024
(51) Int. Cl.: G02B 27/01, G02B 5/30, G02B 27/28

(54) **OPTICAL STRUCTURE AND DISPLAY DEVICE**
OPTISCHE STRUKTUR UND ANZEIGEVORRICHTUNG
STRUCTURE OPTIQUE ET DISPOSITIF D'AFFICHAGE

(30) Priority: 24.03.2023 CN 202310300554
(43) Date of publication of application: 25.09.2024
(73) Proprietor: Beijing Zitiao Network Technology Co., Ltd., Beijing 100190 (CN)
(72) Inventor: BAI, Wenbin, Beijing, 100028 (CN); ZHANG, Ziyang, Beijing, 100028 (CN); HU, Hsin-Yi, Beijing, 100028 (CN)
(74) Representative: Marks & Clerk LLP

(56) References cited:
- US-A1- 2020 284 963
- US-A1- 2022 099 988
- US-A1- 2022 350 148

## Description

### TECHNICAL FIELD

The present disclosure relates to an optical structure and a display device.

### BACKGROUND

Virtual Reality (VR) device, in combination with computer and sensor technology, enables users to experience the sense of immersion in an interactive three-dimensional environment. At present, virtual reality devices include glasses, which adopt an ultra-short focus folded optical path (Pancake) and include a structure consisted of multiple film layers. By means of the folded optical path, a required distance between near-eye display devices and human eyes is greatly reduced, so that thinner and lighter VR devices can be obtained.

US 2020/284963 A1 provides an optical element, the optical element includes an optical surface configured to receive light at a predetermined wavelength in a range from about 400 nm to about 1000 nm. The optical surface is defined by a vertical axis and a horizontal axis defining four Cartesian quadrants sequentially numbered in a counter-clockwise direction. A first longitudinal section of the optical surface is centered on the vertical axis and a second longitudinal section of the optical surface is centered on the horizontal axis. The first and second longitudinal section each extend across opposite edges of the optical surface and have a same substantially uniform retardance for substantially normally incident light. The optical element includes four discrete retarder sections. Each retarder section is disposed on a respective Cartesian quadrant of the optical surface and has a retardance difference from the substantially uniform retardance of the optical surface that is greater than zero.

US 2022/350148 A1 provides an apparatus including a display, a beamsplitter having a first region and a second region, and a reflective polarizer. The reflectance of the second region of the beamsplitter may be appreciably greater than the reflectance of the first region; for example, at least approximately 20% greater. In some examples, the second region may be a peripheral region surrounding a generally centrally located first region. An example apparatus may be configured so that at least some light emitted by the display is transmitted through the first region of the beamsplitter, reflects from the reflective polarizer, reflects from the second region of the beamsplitter, and is then directed through the reflective polarizer to an eye of a user when the user wears the apparatus. Other devices, methods, systems, and computer-readable media are also disclosed.

US 2022/099988 A1 provides an optical module comprising: a partial-transmitting and partial-reflective layer, receiving circularly polarized light or elliptically polarized light; a second phase delay unit, located downstream of an optical path of the partial-transmitting and partial-reflective layer so as to receive and modulate the transmitting circularly polarized light or elliptically polarized light and then perform emission; and a polarized beam splitter, disposed downstream of an optical path of the second phase delay unit, the polarized beam splitter having a light transmission axis, wherein the optical module further comprises a second phase compensation unit located between the second phase delay unit and the polarized beam splitter, and wherein an optical axis of the second phase compensation unit is located in a plane orthogonal to the light transmission axis of the polarized beam splitter, or in a plane orthogonal to a light reflection axis of the polarized beam splitter.

### SUMMARY

Embodiments of the present invention provide an optical structure and a display device as specified in the appended claims.

### BRIEF DESCRIPTION OF DRAWINGS

In order to clearly illustrate the technical solution of the embodiments of the invention, the drawings of the embodiments will be briefly described in the following; it is obvious that the described drawings are only related to some embodiments of the present disclosure and thus are not limitative of the present disclosure.
Fig. 1 is a schematic diagram of an optical structure.
Fig. 2 is a schematic diagram of an optical structure provided according to an example of an embodiment of the present disclosure.
Fig. 3 is a schematic diagram of an optical structure provided according to another example of an embodiment of the present disclosure.
Fig. 4 is a schematic diagram of an optical structure provided according to another example of an embodiment of the present disclosure.
Fig. 5 is a schematic diagram illustrating a folded optical path adopting a phase compensation structure in the optical structure shown in Fig. 4.
Fig. 6 is a schematic diagram of a polarization state of central light and a polarization state of peripheral light after compensation in the folded optical path shown in Fig. 5.
Fig. 7 is a schematic diagram of an optical structure provided according to another example of an embodiment of the present disclosure.
Fig. 8 is a partial structural diagram of a display device according to another embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

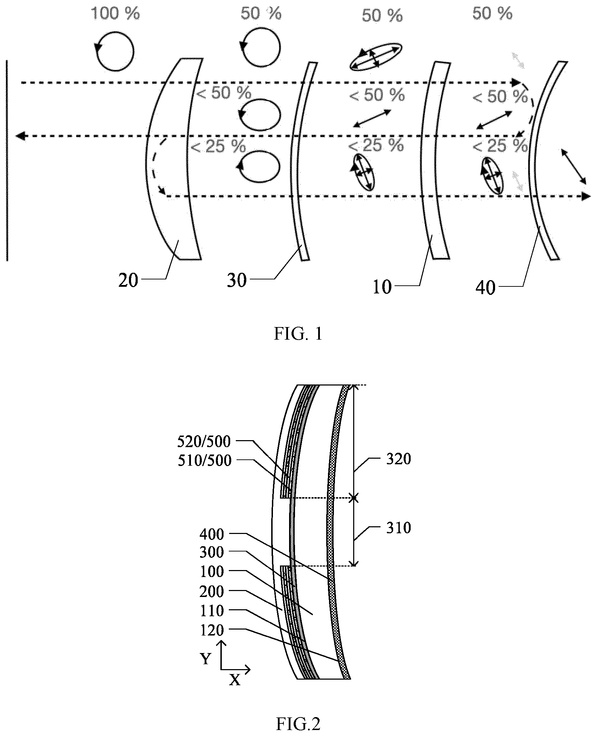

Fig. 1 is a schematic diagram of an optical structure. As shown in Fig. 1, the optical structure includes a lens 10, a transflective film 20 located at a side of the lens 10 facing a display screen, a phase retardation film 30 located between the lens 10 and the transflective film 20, a reflective polarizing film 40 located at a side of the phase retardation film 30 away from the display screen, and a linear polarizing film (not shown) located at a side of the reflective polarizing film 40 away from the display screen. A light-emitting side of the display screen can be provided with a wave plate, and image light emitted from the display screen is converted into left-handed circularly polarized light after passing through the wave plate, and a polarization state of the left-handed circularly polarized light remains unchanged after being transmitted through the transflective film 20. For example, the transflective film 20 allows 50% of a light intensity of incident light to be transmitted therethrough.

During research, inventors of the present application found that when the phase retardation film 30 is attached onto a curved surface of the lens 10, phase retardation characteristics of the phase retardation film 30 would be affected due to stretching. For example, the phase retardation film 30 includes a birefringent material, and a stretching of the phase retardation film 30 would have an influence on birefringent characteristics thereof, thus affecting a change of polarization state of light in the folded optical path (Pancake). For example, light that is exited from the phase retardation film and supposed to be circularly polarized light may become elliptically polarized light. As a result, the elliptically polarized light cannot be completely converted into linearly polarized light when it reaches the reflective polarizing film 40, and the escaped part of the light is referred to as stray light.

As shown in Fig. 1, left-handed circularly polarized light transmitted through the transflective film 20 has a part converted into S-linearly polarized light and another part converted into left-handed elliptically polarized light, after passing through the phase retardation film 30. Thus, a light intensity of the S-linearly polarized light is less than 50%. After transmitting through the lens 10, the above-mentioned S-polarized light reaches the reflective polarizing film 40 and is reflected by the reflective polarizing film 40, and then reaches the phase retardation film 30 after being transmitted through the lens 10, again. After transmitting through the lens 10, the above-mentioned left-handed elliptically polarized light reaches the reflective polarizing film 40, and then light with a partial polarization component in the left-handed elliptically polarized light is reflected by the reflective polarizing film 40 while light with another partial polarization component is transmitted by the reflective polarizing film 40.

As shown in Fig. 1, the S-linearly polarized light is converted into left-handed circularly polarized light after passing through the phase retardation film 30, and the left-handed circularly polarized light is converted into right-handed circularly polarized light after undergoing a half-wave loss at the transflective film 20. For example, the left-handed circularly polarized light with a light intensity less than 50% remains a light intensity of less than 25% after being reflected by the transflective film 20. The right-handed circularly polarized light has a part converted into P-linearly polarized light and another part converted into right-handed elliptically polarized light, after passing through the phase retardation film 30. The above-mentioned P-linearly polarized light is exited to human eyes after being transmitted through the reflective polarizing film and a polarization transmission film; and the light with a partial polarization component in the above-mentioned right-handed elliptically polarized light is exited to human eyes after being transmitted through the reflective polarizing film and the polarization transmission film.

The image light emitted from the display screen can also be converted into right-handed circularly polarized light after passing through the wave plate.

Embodiments of the present invention provide an optical structure and a display device as specified in the appended claims. By arranging a phase compensation structure attached with a phase retardation film, the optical structure provided by the present disclosure can compensate the elliptically polarized light exited from the phase retardation film having a non-planar shape so that the elliptically polarized light is converted into circularly polarized light, thereby improving polarization conversion efficiency and reducing stray light.

The optical structure and the display device provided by the embodiments of the present disclosure are described below with reference to the drawings.

Fig. 2 is a schematic diagram of an optical structure provided according to an example of an embodiment of the present disclosure. As shown in Fig. 2, the optical structure includes a lens 100, a transflective film 200, a phase retardation film 300, and a reflective polarizing film 400 which are arranged in a stacked manner. The lens 100 includes a first surface 110 and a second surface 120, both of which are non-planar surfaces.

In some examples, as shown in Fig. 2, at least one of the first surface 110 and the second surface 120 is an aspheric surface or a spherical surface. For example, both the first surface 110 and the second surface 120 are aspheric surfaces or spherical surfaces; alternatively, one of the first surface 110 and the second surface 120 is a spherical surface and the other one is an aspheric surface. The optical structure provided by the present disclosure is not limited to this, and the first surface and the second surface may also include free-form surfaces and the like. For example, the lens 100 is a monocle. Fig. 2 schematically shows that the first surface 110 is a convex surface and the second surface 120 is a concave surface. However, the present disclosure is not limited to this. The first surface can also be a concave surface and the second surface can also be a convex surface; alternatively, both the first surface and the second surface are convex surfaces; alternatively, both the first surface and the second surface are concave surfaces.

For example, the second surface 120 may be located at a light-emitting side of the first surface 110. For example, when the optical structure is applied to a display device, the display screen is located at a side of the first surface 110 away from the second surface 120 of the lens 100, so that light emitted from the display screen enters the lens 100 after passing through the first surface 110, and then exits through the second surface 120.

As shown in Fig. 2, the transflective film 200 is located at a side of the first surface 110 away from the second surface 120. For example, the transflective film 200 is configured to transmit a part of light and reflect another part of light. For example, the transflective film 200 may include at least one film layer, for example, a thickness of each film layer may be 10 to 200 nanometers. For example, the transflective film 200 may have a transmittance of 50% and a reflectivity of 50%. For example, the transflective film 200 may have a transmittance of 60% and a reflectivity of 40%. For example, the transflective film 200 may have a transmittance of 65% and a reflectivity of 35%. The optical structure provided by the present disclosure is not limited to this, and the transmittance and reflectivity of the transflective film can be set according to product requirements. For example, when the phase retardation film 300 is located at a side of the second surface 120 away from the first surface 110, the transflective film 200 may be plated onto the first surface 110.

As shown in Fig. 2, the phase retardation film 300 is located at a side of the second surface 120 away from the first surface 110, or between the transflective film 200 and the first surface 110. In the example shown in Fig. 2, the phase retardation film is located between the transflective film and the first surface, but the embodiment of the present disclosure is not limited to this. In some other examples, the phase retardation film may be located at a side of the second surface away from the first surface.

In some examples, as shown in Fig. 2, the phase retardation film 300 includes a quarter-wave plate (QWP). For example, in a case that the phase retardation film 300 is not stretched, linearly polarized light will be converted into circularly polarized light after passing through the phase retardation film 300 at 45 degrees, and the phase will be delayed by 1/4 wavelength (both in the left and right directions). Similarly, circularly polarized light will be converted into linearly polarized light after passing through the phase retardation film 300. For example, the phase retardation film 300 is configured to change the polarized form of the light, so that the light can be smoothly reflected or transmitted by the reflective polarizing film.

For example, as shown in Fig. 2, the phase retardation film 300 may be attached onto the non-planar first surface 110 to form a non-planar structure, or the phase retardation film 300 may be attached onto the non-planar second surface 120 to form a non-planar structure. For example, when the phase retardation film 300 is formed in a planar shape, it is configured such that the light transmitted through the phase retardation film 300 can achieve a conversion between a circular polarization state and a linear polarization state. For example, a material of the phase retardation film 300 may include a plastic film with high light transmittance. For example, the phase retardation film 300 has the following characteristics: there are a direction with the lowest refractive index and a direction with the highest refractive index in the film plane which are referred to as a fast axis and a slow axis, respectively, and the phase of the polarized light parallel to the slow axis is delayed by 1/4 wavelength after passing through the phase retardation film 300, as compared with the polarized light parallel to the fast axis after passing through the phase retardation film 300.

As shown in Fig. 2, the reflective polarizing film 400 is located at a side of the phase retardation film 300 away from the transflective film 200.

For example, as shown in Fig. 2, the reflective polarizing film 400 has the following functions: there is a direction of light transmission axis in the film plane, and a transmittance of a polarized component (e.g., one of the S-linearly polarized light and the P-linearly polarized light) of incident light parallel to the direction of light transmission axis is greater than that of a polarized component of the incident light perpendicular to the direction of light transmission axis, while a reflectivity of the polarized component parallel to the direction of light transmission axis is less than that of the polarized component perpendicular to the direction of light transmission axis. For example, the reflective polarizing film 400 can also be referred to as a polarizing beam splitting film. For example, the transmittance of the polarized light parallel to the direction of light transmission axis of the reflective polarizing film 400 is not less than 85%, for example, not less than 90%, for example, not less than 95%, for example, not less than 98%; the reflectivity of the polarized light perpendicular to the direction of light transmission axis of the reflective polarizing film 400 is not less than 85%, for example, not less than 90%, for example, not less than 95%, for example, not less than 98%. For example, the reflective polarizing film 400 may include a liquid crystal polymer film based on cholesteric phase, multilayer reflective polarizing film, metal wire grid polarizer (WGF) and the like.

For example, as shown in Fig. 2, an included angle between the slow axis of the phase retardation film 300 and the light transmission axis of the reflective polarizing film 400 is 45 degrees.

As shown in Fig. 2, the optical structure further includes a phase compensation structure 500, which is located at a side of the phase retardation film 300 away from the lens 100. For example, the phase compensation structure 500 is located between the transflective film 200 and the phase retardation film 300. The phase compensation structure 500 is attached onto a surface of the phase retardation film 300.

As shown in Fig. 2, the phase compensation structure 500 includes at least one first light-transmitting layer 510 and at least one second light-transmitting layer 520 which are arranged in a stacked manner, and the at least one first light-transmitting layer 510 and the at least one second light-transmitting layer 520 are arranged alternately. A refractive index of the first light-transmitting layer 510 is greater than that of the second light-transmitting layer 520, and the number of the at least one first light-transmitting layer 510 is equal to that of the at least one second light-transmitting layer 520. The first light-transmitting layer 510 is attached with the phase retardation film 300. For example, the at least one first light-transmitting layer 510 and the at least one second light-transmitting layer 520 are alternately arranged in a direction parallel to an optical axis of the lens 100, and the optical axis of the lens 100 is parallel to the X direction.

For example, Fig. 2 schematically shows that the number of the first light-transmitting layer and the number of the second light-transmitting layer are both set as two, but the present disclosure is not limited to this. The number of the first light-transmitting layer and the number of the second light-transmitting layer can also be set as one, or three, or four, or more.

In some examples, as shown in Fig. 2, the phase compensation structure 500 is configured to compensate the elliptically polarized light exited from the phase retardation film 300 having a non-planar shape so that the elliptically polarized light is converted into circularly polarized light.

By arranging the phase compensation structure attached with the phase retardation film, the optical structure provided by the present disclosure can compensate the elliptically polarized light exited from the phase retardation film having a non-planar shape so that the elliptically polarized light is converted into circularly polarized light, thereby improving polarization conversion efficiency and reducing stray light.

For example, the phase compensation structure 500 can be used as another phase retardation structure different from the phase retardation film. The phase compensation structure 500 includes a fast axis and a slow axis. For example, the phase compensation structure 500 can decompose incident, linearly polarized light into an o-light component and an e-light component whose optical vectors are along the fast axis and the slow axis respectively. The phase compensation structure 500 enables two branched of polarized light whose optical vectors are perpendicular to each other to generate a relative phase retardation, in order to optimize an optical path difference between the o-light component and the e-light component which are incident into or exited from the phase retardation film 300. For example, Jones vector can be used to represent the above-mentioned phase compensation process: Ex=Axcos(ωt), Ey=Aycos(ωt±(δ)±Δδ). A phase difference between the o-light component and the e-light component exited from the phase retardation film 300 can be δ, and a phase difference that can be compensated by the phase compensation structure 500 for the phase difference between the o-light component and the e-light component incident into or exited from the phase retardation film 300 can be Δδ, where δ+Δδ=π/2. Therefore, after stretching a curved surface of the phase retardation film, it causes the o-light component and the e-light component to have a phase difference δ less than π/2, and the phase difference δ generated by the phase retardation film is then compensated by Δδ through the phase compensation structure, so that the phase difference of the light after passing through the phase retardation film and the phase compensation structure reaches π/2. In this way, a mutual conversion between linearly polarized light and circularly polarized light is realized, so as to reduce the stray light generated in the folded optical path of the optical structure.

For example, as shown in Fig. 2, the optical structure provided by the present disclosure adopts an ultra-short focus folded optical path (Pancake), and the principle of the folded optical path is as follows: a wave plate can be arranged at a light-emitting side of the display screen located at a side of the first surface 110 of the lens 100 away from the second surface 120, and image light emitted from the display screen is converted into right-handed circularly polarized light after passing through the wave plate, and a polarization state of the right-handed circularly polarized light remains unchanged after being transmitted through the transflective film 200. The right-handed circularly polarized light is incident into the phase retardation film 300 and the phase compensation structure 500 and is converted into P-linearly polarized light by the phase retardation film 300 and the phase compensation structure 500, and the P-linearly polarized light is reflected back to the phase retardation film 300 and the phase compensation structure 500 by the reflective polarizing film 400, where a first reflection occurs. Then, after passing through the phase retardation film 300 and the phase compensation structure 500, the P-linearly polarized light is converted into right-handed circularly polarized light, which reaches the transflective film 200 and is reflected at the transflective film 200, where a second reflection occurs. Due to half-wave loss, the reflected light is converted from right-handed circularly polarized light to left-handed circularly polarized light. The left-handed circularly polarized light is converted into S-linearly polarized light after passing through the phase retardation film 300 and the phase compensation structure 500, and then the S-linearly polarized light is transmitted through the reflective polarizing film 400 and emitted to human eyes.

In the above-mentioned folded optical path, different films can be attached onto the same lens or different surfaces of different lenses, or can be superimposed on the same surface of the lens. No matter how the films are attached onto the surface(s) of the lens(es), the arrangement of the optical path and the sequence of positions of the optical films are fixed; for example, the transflective film, the phase retardation film and the reflective polarizing film are arranged, in turn, from the display screen to the human eyes.

The above-described folded optical path can change the polarization state of the light propagating between the reflective polarizing film and the transflective film and realize the folding of light, so that the original focal length of the optical structure can be folded due to the increase of, for example, two times of reflections resulted by the provision of the reflective polarizing film, the phase retardation film and the transflective film as described above, thereby greatly reducing the space required between human eyes and the optical structure, and achieving a smaller and lighter optical structure.

In the embodiments according to the claimed invention, as for instance shown in Fig. 2, a thickness of the phase compensation structure 500 is 0.5-2 microns, a refractive index of the first light-transmitting layer 510 is 1.5-1.9, and a refractive index of the second light-transmitting layer 520 is 1.1-1.4.

The relative phase retardation between two branched of polarized light whose optical vectors are perpendicular to each other, caused by the phase compensation structure, is correlated to the thickness and the refractive index of the phase compensation structure. By configuring the thickness of the phase compensation structure and the refractive indices of various films, the phase difference of the light after passing through the phase retardation film and the phase compensation structure can reach π/2, so as to realize the mutual conversion between linearly polarized light and circularly polarized light.

For example, as shown in Fig. 2, the thickness of the phase compensation structure 500 may be 0.8 to 1.8 microns. For example, the thickness of the phase compensation structure 500 may be 1 to 1.5 microns. For example, the thickness of the first light-transmitting layer 510 may be as same as or different from the thickness of the second light-transmitting layer 520.

For example, as shown in Fig. 2, the refractive index of the first light-transmitting layer 510 may be 1.8 to 1.9. For example, the refractive index of the second light-transmitting layer 520 may be 1.2 to 1.3.

In some examples, as shown in Fig. 2, materials of the first light-transmitting layer 510 and the second light-transmitting layer 520 are both oxide materials.

In some examples, as shown in Fig. 2, the material of the first light-transmitting layer 510 includes at least one of titanium oxide, tantalum oxide and magnesium oxide, and the material of the second light-transmitting layer 520 includes at least one of silicon oxide, aluminum oxide and indium tin oxide.

For example, the material of the first light-transmitting layer 510 includes titanium dioxide (TiO₂), titanium monoxide (TiO), titanium pentoxide (Ti₂O₅), tantalum pentoxide (Ta₂O₅), magnesium oxide (MgO) and the like. For example, the material of the second light-transmitting layer 520 includes silicon dioxide (SiO₂), aluminum trioxide (Al₂O₃), indium tin oxide (ITO) and the like.

For example, as shown in Fig. 2, the phase compensation structure 500 is attached onto a surface of the phase retardation film 300 having been stretched, to form a non-planar structure, for example, the phase compensation structure 500 has a curved surface.

In some examples, as shown in Fig. 2, the phase compensation structure 500 is configured to compensate a phase of light incident thereon, and an incident angle of the light incident on the phase compensation structure 500 is in a range of 50-89 degrees. The above-mentioned incident angle may refer to an angle of light incident on the optical structure with relative to a plane (e.g., an imaginary plane) perpendicular to the optical axis of the lens, and the phase of the light having an included angle of 50-89 degrees with relative to this plane can be compensated. For example, the included angle between the light and the optical axis of the lens 100 can be no more than 40 degrees, that is, the phase of the light having an included angle of no more than 40 degrees with relative to the optical axis of the lens 100 can be compensated.

For example, as shown in Fig. 2, the phase compensation structure 500 can compensate the phase of the incident light with an incident angle of 55-85 degrees. For example, the phase compensation structure 500 can compensate the phase of the incident light with an incident angle of 60-80 degrees. For example, the phase compensation structure 500 can compensate the phase of the incident light with an incident angle of 65-75 degrees.

In some examples, as shown in Fig. 2, the phase compensation structure 500 is configured to compensate the phase of light incident thereon, and a wavelength range of the light incident on the phase compensation structure 500 is in a range of 350-800 nanometers. The phase compensation structure can compensate the phase of light within a visible band in the incident light, so as to reduce stray light in the visible light band.

In some examples, as shown in Fig. 2, the phase retardation film 300 includes a central region 310 and a peripheral region 320 surrounding the central region 310, and the phase compensation structure 500 covers the peripheral region 320 of the phase retardation film 300, and a ratio of an area of the central region 310 to an area of the phase retardation film 300 is not more than 50%. Here, "the ratio of the area of the central region 310 to the area of the phase retardation film 300" refers to an area ratio of the central region occupied on one side surface of the phase retardation film.

For example, the phase compensation structure 500 is only located in the peripheral region 320, and the phase compensation structure 500 does not overlap with the central region 310 in a direction parallel to the optical axis of the lens 100.

The central region of the phase retardation film having a non-planar shape is stretched lightly so that phase retardation characteristics of this part of the phase retardation film are hardly affected; while the peripheral region of the phase retardation film having a non-planar shape is stretched heavily, which seriously affects the phase retardation characteristics thereof. The phase compensation structure is intentionally arranged in the peripheral region of the corresponding phase retardation film to compensate the elliptically polarized light exited from the peripheral region of the phase retardation film so that the elliptically polarized light is converted into circularly polarized light, but the phase compensation structure is not arranged in the central region of the phase retardation film; in this way, the phase compensation structure can compensate the phase retardation characteristics of the phase retardation film in a better way.

For example, as shown in Fig. 2, the central region 310 of the phase retardation film 300 is a region including a center of the phase retardation film 300; the central region 310 may be a circular region with the center of the phase retardation film 300 as a center of circle, and the peripheral region 320 may be an annular region surrounding the central region 310.

For example, as shown in Fig. 2, the ratio of the area of the central region 310 to the area of the phase retardation film 300 is not more than 45%. For example, the ratio of the area of the central region 310 to the area of the phase retardation film 300 is not more than 40%. For example, the ratio of the area of the central region 310 to the area of the phase retardation film 300 is not more than 35%. For example, the ratio of the area of the central region 310 to the area of the phase retardation film 300 is not less than 30%. For example, the ratio of the area of the central region 310 to the area of the phase retardation film 300 is not more than 25%. For example, the ratio of the area of the central region 310 to the area of the phase retardation film 300 is not more than 20%. For example, the ratio of the area of the central region 310 to the area of the phase retardation film 300 is not more than 15%. For example, the ratio of the area of the central region 310 to the area of the phase retardation film 300 is not more than 10%.

In some examples, as shown in Fig. 2, a curvature of one of the first surface 110 and the second surface 120 of the lens 100 on which the phase retardation film 300 is provided is not less than 30 millimeters, and the central region 310 surrounded by the phase compensation structure 500 is provided with a light-transmitting structure, and the light-transmitting structure is a part of one of the phase retardation film 300, the transflective film 200 and the reflective polarizing film 400 which fills the central region 310.

For example, Fig. 2 schematically shows that the phase compensation structure 500 is located between the transflective film 200 and the phase retardation film 300, and the transflective film 200 covers the phase compensation structure 500, so that the transflective film 200 fills the central region 310 surrounded by the phase compensation structure 500. The embodiment of the present disclosure is not limited to this. When the phase compensation structure is located between the phase retardation film and the lens, the phase retardation film covers the phase compensation structure, and the phase retardation film can fill the central region surrounded by the phase compensation structure. Alternatively, when the phase compensation structure is located between the phase retardation film and the reflective polarizing film, the reflective polarizing film covers the phase compensation structure, and the reflective polarizing film can fill the central region surrounded by the phase compensation structure.

For example, in a case that the phase retardation film 300 is attached onto the first surface 110 and the curvature of the first surface 110 is not less than 30 millimeters, the phase compensation structure 500 covers the peripheral region 320 of the phase retardation film 300; alternatively, in a case that the phase retardation film 300 is attached onto the second surface 120 and the curvature of the second surface 120 is not less than 30 millimeters, the phase compensation structure 500 covers the peripheral region 320 of the phase retardation film 300.

When the curvature of the non-planar surface of the lens provided with the phase retardation film is not less than 30 millimeters, there is little difference between the brightness of the light exited after passing through the peripheral region of the phase retardation film and the phase retardation film and the brightness of the light exited after passing through the central region of the phase retardation film only, and the central region of the phase retardation film may not be provided with any other film for optical compensation.

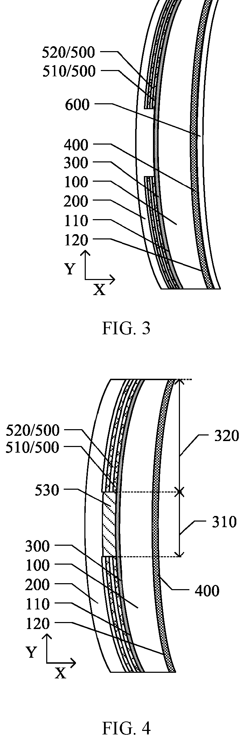

Fig. 3 is a schematic diagram of an optical structure provided according to another example of an embodiment of the present disclosure. The optical structure shown in Fig. 3 is different from the optical structure shown in Fig. 2 in that the optical structure shown in Fig. 3 further includes a linear polarizing film 600, which is located at a side of the reflective polarizing film 400 away from the phase retardation film 300.

For example, as shown in Fig. 3, a transmission axis of the linear polarizing film 600 coincides with a transmission axis of the reflective polarizing film 400. For example, the linear polarizing film 600 is configured to further filter out other stray light, so that only polarized light (e.g., one of S-linearly polarized light and P-linearly polarized light) passing through the linear polarizing film 600 is allowed to enter human eyes. For example, a material of the linear polarizing film 600 may include polyvinyl alcohol (PVA) added with dichroic molecules, a liquid crystal polymer film added with dichroic molecules, and the like.

For example, as shown in Fig. 3, the reflective polarizing film 400 can be attached onto the second surface 120 of the lens 100, and the linear polarizing film 600 can be attached onto a surface of the reflective polarizing film 400.

Fig. 4 is a schematic diagram of an optical structure provided according to another example of an embodiment of the present disclosure. The optical structure shown in Fig. 4 is different from the optical structure shown in Fig. 2 in that the curvature of the surface of the lens 100 provided with the phase retardation film 300 is less than 30 millimeters, and the optical structure further includes a third light-transmitting layer 530.

In some examples, as shown in Fig. 4, the curvature of one of the first surface 110 and the second surface 120 of the lens 100 on which the phase retardation film 300 is provided is less than 30 millimeters. For example, Fig. 4 schematically shows that the phase retardation film 300 is attached onto the first surface 110 of the lens 100, and the curvature of the first surface 110 is less than 30 millimeters, without limiting the present disclosure thereto. The phase retardation film can also be attached onto the second surface of the lens, and the curvature of the second surface is less than 30 millimeters.

In some examples, as shown in Fig. 4, the optical structure further includes a third light-transmitting layer 530 located in the central region 310. The third light-transmitting layer 530 is arranged at the same layer as the phase compensation structure 500 and is connected with the phase compensation structure 500, and a transmittance of the third light-transmitting layer 530 is different from that of the phase compensation structure 500. For example, in the direction along the optical axis of the lens 100, the third light-transmitting layer 530 does not overlap with the phase compensation structure 500.

When the surface of the lens provided with the phase retardation film has a curvature less than 30 millimeters, there will be a certain difference between the brightness of the light exited after passing through the peripheral region of the phase retardation film and the phase compensation structure and the brightness of the light exited after passing through the central region of the phase retardation film only. For example, the brightness of the central region is greater than that of the peripheral region. By arranging the third light-transmitting layer in the central region of the phase retardation film, and by configuring the transmittance of the third light-transmitting layer to be different from that of the phase compensation structure, it is beneficial to reduce the brightness difference between the light exited from the central region and the light exited from the peripheral region and to prevent from the occurrence of visual sudden waves.

By arranging the phase compensation structure and the third light-transmitting layer at the same side of the phase retardation film, the brightness difference of the light exited from different positions of the phase retardation film can be reduced while the phase compensation is carried out to the light exited from the phase retardation film.

For example, as shown in Fig. 4, the phase compensation structure 500 surrounds the third light-transmitting layer 530.

In some examples, as shown in Fig. 4, the transmittance of the third light-transmitting layer 530 is smaller than that of the phase compensation structure 500, which is beneficial to reduce the brightness of light exited from the central region of the phase retardation film.

In some examples, as shown in Fig. 4, a difference between the transmittance of the third light-transmitting layer 530 and the transmittance of the phase compensation structure 500 is not more than 5% of the transmittance of the phase compensation structure 500. For example, the difference between the transmittance of the third light-transmitting layer 530 and the transmittance of the phase compensation structure 500 is not more than 3% of the transmittance of the phase compensation structure 500. The difference between the transmittance of the third light-transmitting layer and the transmittance of the phase compensation structure can be determined according to the difference between the brightness of the light exited from the central region of the phase retardation film and the brightness of the light exited from the peripheral region of the phase retardation film, so as to alleviate the brightness difference.

In some examples, as shown in Fig. 4, at least part of a surface of the third light-transmitting layer 530 away from the lens 100 is recessed with relative to the surface of the phase compensation structure 500 away from the lens 100.

For example, as shown in Fig. 4, a thickness of the third light-transmitting layer 530 is smaller than that of the phase compensation structure 500.

For example, as shown in Fig. 4, the thickness of the third light-transmitting layer 530 is less than 2 microns. For example, the thickness of the third light-transmitting layer 530 is less than 1.8 microns. For example, the thickness of the third light-transmitting layer 530 is less than 1.5 microns. For example, the thickness of the third light-transmitting layer 530 is less than 1 micron. For example, the thickness of the third light-transmitting layer 530 is less than 0.7 micron. For example, the thickness of the third light-transmitting layer 530 is less than 0.5 micron. For example, the thickness of the third light-transmitting layer 530 is less than 0.4 micron.

In some examples, as shown in Fig. 4, a surface at a position where the third light-transmitting layer 530 is connected with the phase compensation structure 500 is recessed with relative to a surface at a position where the phase compensation structure 500 is connected with the third light-transmitting layer 530, and a recessed depth is smaller than the thickness of the phase retardation film 300.

For example, as shown in Fig. 4, a thickness difference between the phase compensation structure 500 and the third light-transmitting layer 530 is smaller than the thickness of the phase retardation film 300, so as to prevent from affecting the optical performance of the film (e.g., the phase retardation film or the transflective film) covering the phase compensation structure and the third light-transmitting layer.

In some examples, as shown in Fig. 4, the third light-transmitting layer 530 includes a metal dielectric film or a reflective dielectric film. For example, a material of the metal dielectric film may include metals such as silver. For example, a material of the reflective dielectric film may include metal oxides, such as zinc oxide, aluminum oxide, etc.

The optical structure provided by the present disclosure can reduce the brightness difference between light exited from the central region of the phase retardation film and light exited from the peripheral region of the phase retardation film, by selecting the thickness and material of the third transparent layer.

For example, Figs. 1 to 4 schematically show that the transflective film 200, the phase compensation structure 500 and the phase retardation film 300 are all arranged on the first surface 110 of the lens 100, and the reflective polarizing film 400 is arranged on the second surface 120 of the lens 100. The embodiment of the present disclosure is not limited to this. For example, the transflective film can be arranged on the first surface of the lens, and the phase compensation structure, the phase retardation film and the reflective polarizing film can be arranged on the second surface of the lens. Alternatively, the transflective film can be arranged on the first surface of the lens, the phase compensation structure and the phase retardation film can be arranged on the second surface of the lens, and the reflective polarizing film can be arranged on the surface of another lens.

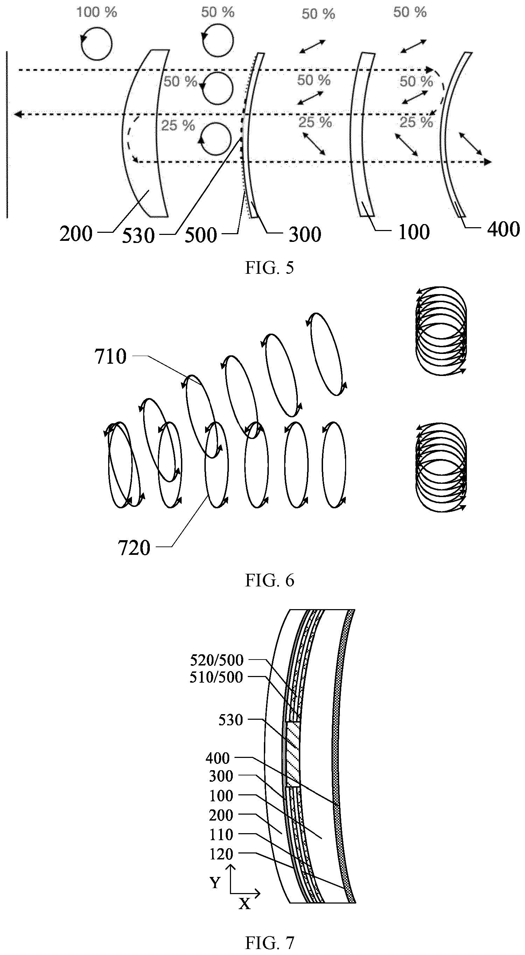

Fig. 5 is a schematic diagram illustrating a folded optical path using the phase compensation structure in the optical structure shown in Fig. 4. Fig. 6 is a schematic diagram of a polarization state of central light and a polarization state of peripheral light after compensation in the folded optical path shown in Fig. 5. As shown in Figs. 4 to 6, light 710 exited from the peripheral region 320 of the phase retardation film 300 is circularly polarized or approximately circularly polarized after being compensated by the phase compensation structure 500, and light 720 exited from the central region 310 of the phase retardation film 300 is circularly polarized light.

For example, as shown in Figs. 5 and 6, the image light emitted from the display screen is converted into left-handed circularly polarized light after passing through the wave plate, and the polarization state of the left-handed circularly polarized light remains unchanged after being transmitted through the transflective film 200. For example, the transflective film 200 allows 50% of light intensity to be transmitted. The left-handed circularly polarized light transmitted by the transflective film 200 has a part converted into S-linearly polarized light after passing through the central region of the phase retardation film 300, and another part converted into S-linearly polarized light after passing through the peripheral region of the phase retardation film 300 and the phase compensation structure 500, and a light intensity of the converted S-linearly polarized light is still substantially 50% of a light intensity of the incident light. The above-mentioned S-polarized light reaches the reflective polarizing film 400 after being transmitted by the lens 100, and then is reflected by the reflective polarizing film 400 and reaches the phase retardation film 300 after being transmitted by the lens 100 again. A part of the S-linearly polarized light passes through the peripheral region of the phase retardation film 300 and the phase compensation structure 500 and is converted into left-handed circularly polarized light, while another part of the S-linearly polarized light passes through the central region of the phase retardation film 300 and is converted into left-handed circularly polarized light. The left-handed circularly polarized light undergoes a half-wave loss at the transflective film 200 and is converted into right-handed circularly polarized light. For example, a light intensity of the right-handed circularly polarized light, after being reflected by the transflective film 200, is 25% of the light intensity of the incident light. A part of the right-handed circularly polarized light passes through the peripheral region of the phase retardation film 300 and the phase compensation structure 500 and is converted into P-linearly polarized light, and another part of the right-handed circularly polarized light passes through the central region of the phase retardation film 300 and is converted into P-linearly polarized light. The P-linearly polarized light passes through the reflective polarizing film 400 and is exited to human eyes.

Fig. 7 is a schematic diagram of an optical structure provided according to another example of an embodiment of the present disclosure. The optical structure shown in Fig. 7 is different from the optical structure shown in Fig. 4 in that the phase compensation structure 500 is located between the phase retardation film 300 and the lens 100. The characteristics of various films in the optical structure shown in Fig. 7 are the same as those of various films in the optical structure shown in Fig. 4, and will not be described here.

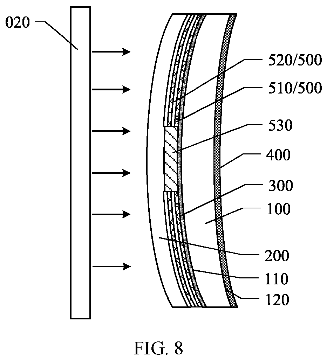

Fig. 8 is a partial structural diagram of a display device according to another embodiment of the present disclosure. As shown in Fig. 8, the display device includes a display screen 020 and the optical structure shown in any of the above embodiments. The display screen 020 is located at a side of the first surface 110 away from the second surface 120. The optical structure schematically shown in Fig. 8 is the optical structure shown in Fig. 4, but the present disclosure is not limited thereto, and the optical structure in the display device can also be the optical structure in other examples described above.

For example, as shown in Fig. 8, a display surface of the display screen 020 is located at a focal plane of the light incident side of the optical structure.

For example, the display screen 020 can be any type of display screen, such as a liquid crystal display screen, an organic light emitting diode display screen, an inorganic light emitting diode display screen, a quantum dot display screen, a projector (such as an LCOS micro projector), and the like.

For example, the display device may be a virtual reality (VR) display device. For example, the virtual reality display device can be a display device adopting an ultra-short focus folded optical path.

For example, the display device may be a near-eye display device, which may be a wearable VR helmet, VR glasses, etc., and embodiments of the present disclosure are not limited thereto.

The following statements should be noted:
(1) In the accompanying drawings of the embodiments of the present disclosure, the drawings involve only the structure(s) in connection with the embodiment(s) of the present disclosure, and other structure(s) can be referred to common design(s).
(2) In case of no conflict, features in one embodiment or in different embodiments can be combined.

What have been described above are only specific implementations of the present disclosure, the protection scope of the present disclosure is not limited thereto, and the protection scope of the present disclosure should be based on the protection scope of the claims.

## Claims

1. An optical structure, comprising:
a lens (100), comprising a first surface (110) and a second surface (120), wherein both the first surface (110) and the second surface (120) are non-planar surfaces;
a transflective film (200), located at a side of the first surface (110) away from the second surface (120);
a phase retardation film (300), located at a side of the second surface (120) away from the first surface (110) or located between the transflective film (200) and the first surface (110); and
a reflective polarizing film (400), located at a side of the phase retardation film (300) away from the transflective film (200), wherein
the optical structure further comprises a phase compensation structure (500) which is located between the phase retardation film (300) and the lens (100) or located at a side of the phase retardation film (300) away from the lens (100), and the phase compensation structure (500) comprises at least one first light-transmitting layer (510) and at least one second light-transmitting layer (520) which are arranged in a stacked manner, wherein the at least one first light-transmitting layer (510) and the at least one second light-transmitting layer (520) are alternately arranged, and a refractive index of the first light-transmitting layer (510) is greater than a refractive index of the second light-transmitting layer (520), and a number of the at least one first light-transmitting layer (510) is equal to a number of the at least one second light-transmitting layer (520); the first light-transmitting layer (510) is attached with the phase retardation film (300); and a thickness of the phase compensation structure (500) is 0.5-2 microns, the refractive index of the first light-transmitting layer (510) is 1.5-1.9, and the refractive index of the second light-transmitting layer (520) is 1.1-1.4.

2. The optical structure according to claim 1, wherein the phase retardation film (300) comprises a central region (310) and a peripheral region (320) surrounding the central region (310), the phase compensation structure (500) covers the peripheral region (320) of the phase retardation film (300), and a ratio of an area of the central region (310) to an area of the phase retardation film (300) is not more than 50%.

3. The optical structure according to claim 2, wherein
one of the first surface (110) and the second surface (120) on which the phase retardation film (300) is arranged has a curvature not less than 30 millimeters, and
the central region (310) is provided with a light-transmitting structure, and the light-transmitting structure is a part of one of the phase retardation film (300), the transflective film (200) and the reflective polarizing film (400) which fills the central region (310).

4. The optical structure according to claim 2, wherein one of the first surface (110) and the second surface (120) on which the phase retardation film (300) is arranged has a curvature less than 30 millimeters;
the optical structure further comprises a third light-transmitting layer (530) located in the central region (310), the third light-transmitting layer (530) is arranged at the same layer as the phase compensation structure (500) and is connected with the phase compensation structure (500), and a transmittance of the third light-transmitting layer (530) is different from a transmittance of the phase compensation structure (500).

5. The optical structure according to claim 4, wherein a difference between the transmittance of the third light-transmitting layer (530) and the transmittance of the phase compensation structure (500) is not more than 5% of the transmittance of the phase compensation structure (500).

6. The optical structure according to claim 4, wherein the transmittance of the third light-transmitting layer (530) is smaller than the transmittance of the phase compensation structure (500).

7. The optical structure according to claim 4, wherein at least part of a surface of the third light-transmitting layer (530) away from the lens (100) is recessed relative to a surface of the phase compensation structure (500) away from the lens (100).

8. The optical structure according to claim 7, wherein a surface at a position where the third light-transmitting layer (530) is connected with the phase compensation structure (500) is recessed with relative to a surface at a position where the phase compensation structure (500) is connected with the third light-transmitting layer (530), and a recessed depth is smaller than a thickness of the phase retardation film (300).

9. The optical structure according to any one of claims 1-8, wherein the phase compensation structure (500) is configured to compensate a phase of light incident on the phase compensation structure (500), and an incident angle of the light incident on the phase compensation structure (500) is 50 to 89 degrees.

10. The optical structure according to any one of claims 1-9, wherein the phase compensation structure (500) is configured to compensate a phase of light incident on the phase compensation structure (500), and a wavelength range of the light incident on the phase compensation structure (500) is 350 to 800 nanometers.

11. The optical structure according to any one of claims 2-8, wherein the phase retardation film (300) comprises a quarter-wave plate, the phase retardation film (300) has a non-planar structure, and the phase compensation structure (500) is configured to compensate elliptically polarized light exited from the peripheral region (320) of the phase retardation film (300) so that the elliptically polarized light is converted into circularly polarized light.

12. The optical structure according to any one of claims 1-11, wherein
materials of the first light-transmitting layer (510) and the second light-transmitting layer (520) are both oxide materials, or the material of the first light-transmitting layer (510) comprises a liquid crystal material; optionally,
the material of the first light-transmitting layer (510) comprises at least one of titanium oxide, tantalum oxide and magnesium oxide, and the material of the second light-transmitting layer (520) comprises at least one of silicon oxide, aluminum oxide and indium tin oxide.

13. The optical structure according to any one of claims 4-8, wherein the third light-transmitting layer (530) comprises a metal dielectric film or a reflective dielectric film.

14. A display device, comprising a display screen (020) and the optical structure according to any one of claims 1-13, wherein the display screen (020) is located at a side of the first surface (110) away from the second surface (120).

## Patentansprüche

1. Optische Struktur, umfassend:
eine Linse (100), die eine erste Oberfläche (110) und eine zweite Oberfläche (120) umfasst, wobei sowohl die erste Oberfläche (110) als auch die zweite Oberfläche (120) nicht-ebene Oberflächen sind;
einen transflektiven Film (200), der an einer Seite der ersten Oberfläche (110) gelegen ist, die von der zweiten Oberfläche (120) abgewandt ist;
einen Phasenverzögerungsfilm (300), der an einer von der ersten Oberfläche (110) abgewandten Seite der zweiten Oberfläche (120) gelegen ist oder zwischen dem transflektiven Film (200) und der ersten Oberfläche (110) gelegen ist; und
einen reflektierenden Polarisationsfilm (400), der an einer dem transflektiven Film (200) abgewandten Seite des Phasenverzögerungsfilms (300) gelegen ist, wobei
die optische Struktur weiter eine Phasenkompensationsstruktur (500) umfasst, die zwischen dem Phasenverzögerungsfilm (300) und der Linse (100) oder an einer von der Linse (100) abgewandten Seite des Phasenverzögerungsfilms (300) gelegen ist, und die Phasenkompensationsstruktur (500) mindestens eine erste lichtdurchlässige Schicht (510) und mindestens eine zweite lichtdurchlässige Schicht (520) umfasst, die auf gestapelte Weise angeordnet sind, wobei die mindestens eine erste lichtdurchlässige Schicht (510) und die mindestens eine zweite lichtdurchlässige Schicht (520) abwechselnd angeordnet sind und ein Brechungsindex der ersten lichtdurchlässigen Schicht (510) größer ist als ein Brechungsindex der zweiten lichtdurchlässigen Schicht (520) und eine Anzahl der mindestens einen ersten lichtdurchlässigen Schicht (510) gleich einer Anzahl der mindestens einen zweiten lichtdurchlässigen Schicht (520) ist; die erste lichtdurchlässige Schicht (510) an dem Phasenverzögerungsfilm (300) angebracht ist; und eine Dicke der Phasenkompensationsstruktur (500) 0,5-2 Mikrometer beträgt, der Brechungsindex der ersten lichtdurchlässigen Schicht (510) 1,5-1,9 beträgt und der Brechungsindex der zweiten lichtdurchlässigen Schicht (520) 1,1-1,4 beträgt.

2. Optische Struktur nach Anspruch 1, wobei der Phasenverzögerungsfilm (300) einen zentralen Bereich (310) und einen den zentraler Bereich (310) umgebenden Randbereich (320) umfasst, wobei die Phasenkompensationsstruktur (500) den Randbereich (320) des Phasenverzögerungsfilms (300) bedeckt und ein Verhältnis einer Fläche des zentralen Bereichs (310) zu einer Fläche des Phasenverzögerungsfilms (300) nicht mehr als 50 % beträgt.

3. Optische Struktur nach Anspruch 2, wobei
eine der ersten Oberfläche (110) und der zweiten Oberfläche (120), auf der der Phasenverzögerungsfilm (300) angeordnet ist, eine Krümmung von nicht weniger als 30 Millimetern aufweist, und
der zentrale Bereich (310) mit einer lichtdurchlässigen Struktur bereitgestellt ist und die lichtdurchlässige Struktur Teil eines Phasenverzögerungsfilms (300), des transflektiven Films (200) und des reflektierenden Polarisationsfilms (400) ist, der den zentralen Bereich (310) ausfüllt.

4. Optische Struktur nach Anspruch 2, wobei eine der ersten Oberfläche (110) und der zweiten Oberfläche (120), auf der der Phasenverzögerungsfilm (300) angeordnet ist, eine Krümmung von weniger als 30 Millimetern aufweist;
wobei die optische Struktur weiter eine dritte lichtdurchlässige Schicht (530) umfasst, die im zentralen Bereich (310) gelegen ist, wobei die dritte lichtdurchlässige Schicht (530) auf derselben Schicht wie die Phasenkompensationsstruktur (500) angeordnet ist und mit der Phasenkompensationsstruktur (500) verbunden ist, und wobei sich ein Transmissionsgrad der dritten lichtdurchlässigen Schicht (530) von einem Transmissionsgrad der Phasenkompensationsstruktur (500) unterscheidet.

5. Optische Struktur nach Anspruch 4, wobei ein Unterschied zwischen dem Transmissionsgrad der dritten lichtdurchlässigen Schicht (530) und dem Transmissionsgrad der Phasenkompensationsstruktur (500) nicht mehr als 5 % des Transmissionsgrads der Phasenkompensationsstruktur (500) beträgt.

6. Optische Struktur nach Anspruch 4, wobei der Transmissionsgrad der dritten lichtdurchlässigen Schicht (530) kleiner ist als der Transmissionsgrad der Phasenkompensationsstruktur (500).

7. Optische Struktur nach Anspruch 4, wobei mindestens ein Teil einer Oberfläche der dritten lichtdurchlässigen Schicht (530) von der Linse (100) abgewandt in Bezug auf eine Oberfläche der Phasenkompensationsstruktur (500) von der der Linse (100) abgewandt vertieft ist.

8. Optische Struktur nach Anspruch 7, wobei eine Oberfläche an einer Position, an der die dritte lichtdurchlässige Schicht (530) mit der Phasenkompensationsstruktur (500) verbunden ist, in Bezug auf eine Oberfläche an einer Position vertieft ist, an der die Phasenkompensationsstruktur (500) mit der dritten lichtdurchlässigen Schicht (530) verbunden ist, und eine vertiefte Tiefe kleiner ist als eine Dicke des Phasenverzögerungsfilms (300).

9. Optische Struktur nach einem der Ansprüche 1-8, wobei die Phasenkompensationsstruktur (500) so konfiguriert ist, dass sie eine Phase des auf die Phasenkompensationsstruktur (500) einfallenden Lichts kompensiert und ein Einfallswinkel des auf die Phasenkompensationsstruktur (500) einfallenden Lichts 50 bis 89 Grad beträgt.

10. Optische Struktur nach einem der Ansprüche 1-9, wobei die Phasenkompensationsstruktur (500) so konfiguriert ist, dass sie eine Phase des auf die Phasenkompensationsstruktur (500) einfallenden Lichts kompensiert und ein Wellenlängenbereich des auf die Phasenkompensationsstruktur (500) einfallenden Lichts 350 bis 800 Nanometer beträgt.

11. Optische Struktur nach einem der Ansprüche 2-8, wobei der Phasenverzögerungsfilm (300) eine Viertelwellenplatte umfasst, der Phasenverzögerungsfilm (300) eine nicht-ebene Struktur aufweist und die Phasenkompensationsstruktur (500) so konfiguriert ist, dass sie elliptisch polarisiertes Licht, das aus dem Randbereich (320) des Phasenverzögerungsfilms (300) austritt, so kompensiert, dass das elliptisch polarisierte Licht in zirkular polarisiertes Licht umgewandelt wird.

12. Optische Struktur nach einem der Ansprüche 1-11, wobei
Materialien sowohl der ersten lichtdurchlässigen Schicht (510) als auch der zweiten lichtdurchlässigen Schicht (520) Oxidmaterialien sind oder das Material der ersten lichtdurchlässigen Schicht (510) ein Flüssigkristallmaterial umfasst; wobei
das Material der ersten lichtdurchlässigen Schicht (510) optional mindestens eines umfasst von Titanoxid, Tantaloxid und Magnesiumoxid und das Material der zweiten lichtdurchlässigen Schicht (520) mindestens eines umfasst von Siliziumoxid, Aluminiumoxid und Indiumzinnoxid.

13. Optische Struktur nach einem der Ansprüche 4-8, wobei die dritte lichtdurchlässige Schicht (530) einen metallischen dielektrischen Film oder einen reflektierenden dielektrischen Film umfasst.

14. Anzeigevorrichtung, die einen Anzeigebildschirm (020) und die optische Struktur nach einem der Ansprüche 1-13 umfasst, wobei der Anzeigebildschirm (020) an einer Seite der ersten Oberfläche (110) gelegen ist, die von der zweiten Oberfläche (120) abgewandt ist.

## Revendications

1. Structure optique comprenant :
une lentille (100), comprenant une première surface (110) et une seconde surface (120), dans laquelle la première surface (110) et la seconde surface (120) sont toutes deux des surfaces non planes ;
un film transflectif (200), situé sur un côté de la première surface (110) éloigné de la seconde surface (120) ;
un film à retard de phase (300), situé sur un côté de la deuxième surface (120) éloigné de la première surface (110) ou situé entre le film transflectif (200) et la première surface (110) ; et
un film polarisant réfléchissant (400), situé sur un côté du film à retard de phase (300) éloigné du film transflectif (200), dans lequel
la structure optique comprend en outre une structure de compensation de phase (500) qui est située entre le film à retard de phase (300) et la lentille (100) ou située sur un côté du film à retard de phase (300) à l'opposé de la lentille (100), et la structure de compensation de phase (500) comprend au moins une première couche de transmission de lumière (510) et au moins une deuxième couche de transmission de lumière (520) qui sont agencées de manière empilée, dans laquelle la au moins une première couche de transmission de lumière (510) et la au moins une deuxième couche de transmission de lumière (520) sont disposées en alternance, et un indice de réfraction de la première couche de transmission de lumière (510) étant supérieur à un indice de réfraction de la deuxième couche de transmission de lumière (520), et un nombre de la au moins une première couche de transmission de lumière (510) est égal à un nombre de la au moins une deuxième couche de transmission de lumière (520) ; la première couche de transmission de lumière (510) est fixée au film de retard de phase (300) ; et une épaisseur de la structure de compensation de phase (500) est de 0,5 à 2 microns, l'indice de réfraction de la première couche de transmission de lumière (510) est de 1,5 à 1,9, et l'indice de réfraction de la deuxième couche de transmission de lumière (520) est de 1,1 à 1,4.

2. Structure optique selon la revendication 1, dans laquelle le film de retard de phase (300) comprend une région centrale (310) et une région périphérique (320) entourant la région centrale (310), la structure de compensation de phase (500) recouvre la région périphérique (320) du film à retard de phase (300), et un rapport d'une zone de la région centrale (310) à une zone du film à retard de phase (300) n'est pas supérieur à 50 %.

3. Structure optique selon la revendication 2, dans laquelle
l'une des première (110) et seconde (120) surfaces sur lesquelles est agencé le film à retard de phase (300) présente une courbure non inférieure à 30 millimètres, et
la région centrale (310) est dotée d'une structure de transmission de lumière, et la structure de transmission de lumière fait partie de l'un des films à retard de phase (300), du film transflectif (200) et du film polarisant réfléchissant (400) qui remplit la région centrale (310).

4. Structure optique selon la revendication 2, dans laquelle l'une de la première surface (110) et de la seconde surface (120) sur laquelle est agencé le film à retard de phase (300) présente une courbure inférieure à 30 millimètres ;
la structure optique comprend en outre une troisième couche de transmission de lumière (530) située dans la région centrale (310), la troisième couche de transmission de lumière (530) est agencée sur la même couche que la structure de compensation de phase (500) et est connectée à la structure de compensation de phase (500), et une transmittance de la troisième couche de transmission de lumière (530) est différente d'une transmittance de la structure de compensation de phase (500).

5. Structure optique selon la revendication 4, dans laquelle la différence entre la transmittance de la troisième couche de transmission de lumière (530) et la transmittance de la structure de compensation de phase (500) n'est pas supérieure à 5 % de la transmittance de la structure de compensation de phase (500).

6. Structure optique selon la revendication 4, dans laquelle la transmittance de la troisième couche de transmission de lumière (530) est inférieure à la transmittance de la structure de compensation de phase (500).

7. Structure optique selon la revendication 4, dans laquelle au moins une partie d'une surface de la troisième couche de transmission de lumière (530) éloignée de la lentille (100) est en retrait par rapport à une surface de la structure de compensation de phase (500) éloignée de la lentille (100).

8. Structure optique selon la revendication 7, dans laquelle une surface à une position où la troisième couche de transmission de lumière (530) est connectée à la structure de compensation de phase (500) est en retrait par rapport à une surface à une position où la structure de compensation de phase (500) est connectée à la troisième couche de transmission de lumière (530), et une profondeur d'encastrement est inférieure à une épaisseur du film de retard de phase (300).

9. Structure optique selon l'une quelconque des revendications 1-8, dans laquelle la structure de compensation de phase (500) est configurée pour compenser une phase de lumière incidente sur la structure de compensation de phase (500), et un angle d'incidence de la lumière incidente sur la structure de compensation de phase (500) est de 50 à 89 degrés.

10. Structure optique selon l'une quelconque des revendications 1-9, dans laquelle la structure de compensation de phase (500) est configurée pour compenser une phase de lumière incidente sur la structure de compensation de phase (500), et une plage de longueurs d'onde de la lumière incidente sur la structure de compensation de phase (500) est de 350 à 800 nanomètres.

11. Structure optique selon l'une quelconque des revendications 2-8, dans laquelle le film de retard de phase (300) comprend une lame quart d'onde, le film de retard de phase (300) présente une structure non plane, et la structure de compensation de phase (500) est configurée pour compenser la lumière polarisée elliptiquement sortant de la région périphérique (320) du film à retard de phase (300) de sorte que la lumière polarisée elliptiquement soit convertie en lumière polarisée circulairement.

12. Structure optique selon l'une quelconque des revendications 1-11, dans laquelle
les matériaux de la première couche de transmission de lumière (510) et de la deuxième couche de transmission de lumière (520) sont tous deux des matériaux d'oxyde, ou le matériau de la première couche de transmission de lumière (510) comprend un matériau à cristaux liquides ; éventuellement,
le matériau de la première couche de transmission de lumière (510) comprend au moins un élément parmi l'oxyde de titane, l'oxyde de tantale et l'oxyde de magnésium, et le matériau de la deuxième couche de transmission de lumière (520) comprend au moins un élément parmi l'oxyde de silicium, l'oxyde d'aluminium et l'oxyde d'étain-indium.

13. Structure optique selon l'une quelconque des revendications 4-8, dans laquelle la troisième couche de transmission de lumière (530) comprend un film diélectrique métallique ou un film diélectrique réfléchissant.

14. Dispositif d'affichage, comprenant un écran d'affichage (020) et la structure optique selon l'une quelconque des revendications 1-13, dans lequel l'écran d'affichage (020) est situé sur un côté de la première surface (110) éloigné de la seconde surface (120).
